# EUROPÄISCHE PATENTSCHRIFT

(11) **EP 2 623 239 B1**
(45) Veröffentlichungstag und Bekanntmachung des Hinweises auf die Patenterteilung: **13.10.2021**
(21) Anmeldenummer: 12198472.8
(22) Anmeldetag: 20.12.2012
(51) Int. Cl.: B23B 35/00, B23Q 3/06, B23Q 5/26, B25J 9/16, B23B 39/00, B23Q 5/22, F15B 3/00, B25J 11/00, B25J 15/00, B23B 39/24

(54) **Bearbeitungswerkzeug und Bearbeitungsverfahren**
Machining tool and machining method
Outil de traitement et procédé de traitement

(30) Priorität: 22.12.2011 DE 202011052431 U
(43) Veröffentlichungstag der Anmeldung: 07.08.2013
(73) Patentinhaber: KUKA Systems GmbH, 86165 Augsburg (DE)
(72) Erfinder: Haman, Robert, 86165 Augsburg (DE); Kranz, Josef, 86568 Hollenbach (DE)
(74) Vertreter: Ernicke, Klaus Stefan

(56) Entgegenhaltungen:
- EP-A1- 2 017 024
- EP-A1- 2 073 084
- WO-A1-2008/027001
- JP-A- S60 249 519
- JP-A- 2011 216 050
- None

## Beschreibung

Die Erfindung betrifft ein Bearbeitungswerkzeug, insbesondere ein Bohrwerkzeug, und ein Bearbeitungsverfahren, insbesondere Bohrverfahren, mit den Merkmalen im Oberbegriff des Verfahrens- und Vorrichtungshauptanspruchs.

Ein solches Bearbeitungswerkzeug und ein solches Bearbeitungsverfahren sind aus der JP S60 249519 A, aus der JP 2011 216050 A und aus der EP 2 073 084 A1 bekannt.

Aus der DE 41 24 078 A1 ist ein Bohrwerkzeug für Roboteranwendungen bekannt. Es wird von einem mehrachsigen und programmierbaren Roboter mit positionsgesteuerten Achsen geführt und zugestellt. Die Bohrwelle wird mit integrierten eigenständigen Antrieben des Bohrwerkzeugs vorgeschoben und gedreht.

Aus der Praxis sind andere Bohrwerkzeuge für Roboteranwendungen bekannt. Der Roboter hält dabei das lediglich mit einem Drehantrieb ausgestattete Bohrwerkzeug schwebend und drückt es gegen das Werkstück, wobei der Vorschub beim Bohrprozess durch eine Zustellbewegung des Roboters direkt ausgeübt wird.

Es ist Aufgabe der vorliegenden Erfindung, eine verbesserte Bearbeitungstechnik aufzuzeigen.

Die Erfindung löst diese Aufgabe mit den Merkmalen im Verfahrens- und Vorrichtungshauptanspruch.

Bei der beanspruchten Bearbeitungstechnik wird der Vorschub des Bearbeitungselements, z.B. eines Bohrers, von einer Handhabungseinrichtung, vorzugsweise einem mehrachsigen Roboter, über einen Anschluss an einer Vorschubeinrichtung des Bearbeitungswerkzeugs eingeleitet. Dies bietet verschiedene Vorteile.

Einerseits kann das beanspruchte Bearbeitungswerkzeug eigenständig mit einer Stützeinrichtung am Werkstück oder an einer zugeordneten Schablone abgestützt werden. Hierüber können Zustellkräfte abgestützt werden. Auch eine Vorschubeinrichtung kann eine werkstückseitige Abstützung erhalten. Ferner können bei einer Fixierung der Stützeinrichtung am Werkstück oder an einer zugeordneten Schablone Momente eines evtl. Antriebs für ein Bearbeitungselement, z.B. ein Bohrelement, aufgenommen und werkstückseitig abgestützt werden. Dies entlastet eine Vorschubeinrichtung und einen angeschlossenen Roboter. Anderseits kann der Vorschub des Bearbeitungselements feinfühlig gesteuert und dosiert werden. Der Vorschub kann außerdem verstärkt werden. Das beanspruchte Bearbeitungswerkzeug weist erfindungsgemäß eine Verstärkungseinrichtung für den Vorschub, insbesondere für die Vorschubkraft, eines Bearbeitungselements auf. Eine Kombination der Verstärkungseinrichtung mit einer Stützeinrichtung ist dabei besonders vorteilhaft.

Der Vorschub kann z.B. von einem Leichtbauroboter, über einen Anschluss einer Vorschubeinrichtung eingeleitet werden. Die Verstärkungseinrichtung ist für den Einsatz von Leichtbaurobotern mit niedrigem Gewicht und einer niedrigen Traglast oder Wirkkraft von besonderem Vorteil und ermöglicht deren Einsatz auch bei Bearbeitungsaufgaben, insbesondere Bohrprozessen, die eine Vorschub- und Andrückkraft verlangen, die höher als die Traglast oder Wirkkraft des Roboters, insbesondere Leichtbauroboters ist. Auch die Momentenaufnahme durch eine Stützeinrichtung ist für einen Leichtbauroboter besonders vorteilhaft.

Mit der Verstärkungseinrichtung und ggf. der Stützeinrichtung kann ein dynamisches Bearbeitungswerkzeug, insbesondere ein Bohrwerkzeug, geschaffen werden, welches einen gegenüber vorbekannten Konstruktionen wesentlich erweiterten Einsatzbereich hat und für unterschiedlichste Arten von Handhabungseinrichtungen und Robotern geeignet ist.

Die Verstärkungseinrichtung kann eine fluidische, insbesondere hydraulische Übersetzung oder eine mechanische Übersetzung, z.B. ein Zahnradgetriebe, aufweisen. Durch die Übersetzung wird ein großer Vorschubweg mit niedriger Vorschubkraft der Handhabungseinrichtung in einen kleineren Vorschubweg mit verstärkter Vorschubkraft übersetzt.

Das Bearbeitungswerkzeug kann einen Antrieb für Eigenbewegungen, insbesondere eine Drehbewegung, des Bearbeitungselements aufweisen, was im Zusammenwirken mit einer Verstärkungseinrichtung für den Vorschub besonders günstig ist. Mittels einer Antriebsübertragung können die Vorschubbewegung und die Eigenbewegung, insbesondere Drehbewegung, des Bearbeitungselements einander überlagert werden.

Die Vorschubeinrichtung kann mit einer Fixiereinrichtung ausgerüstet sein, welche den Vorschub bei der Zustellung des Bearbeitungswerkzeugs an ein Werkstück oder eine zugeordnete Schablone blockiert und anschließend für die Durchführung des Bearbeitungsprozesses und den Vorschub freigeschaltet werden kann.

Das Bearbeitungswerkzeug kann ferner eine Spanneinrichtung aufweisen, die eine temporäre Fixierung am Werkstück oder einer zugeordneten Schablone ermöglicht. Dies ist für die Stützfunktion und die Positionierung von Vorteil. Die Anordnung und Positionierung einer Schablone mit Durchgangsöffnungen an den vorgesehenen Bearbeitungsstellen am Werkstück ist für die Prozessqualität besonders günstig.

Die bevorzugt mehrachsige und programmierbare Handhabungseinrichtung kann vorteilhafterweise als Roboter mit einer Robotersteuerung ausgebildet sein. Hierbei ist es besonders günstig, wenn der Roboter eine oder mehrere kraftgesteuerte oder kraftgeregelte Roboterachsen mit einer zugeordneten Sensorik aufweist, die insbesondere vom Werkzeug her einwirkende Belastungen auf die Roboterachsen erfassen kann. Diese Sensorik kann zur Überwachung und Steuerung sowie ggf. Regelung des Bearbeitungsprozesses eingesetzt werden. Hierüber kann auch ein Durchbohren eines Werkstücks mittels Detektion des zuerst ansteigenden und dann wieder abfallenden Bohrwiderstands erfasst werden. Auch Fehlfunktionen des Bearbeitungswerkzeugs, z.B. ein Bruch oder anderweitiges Versagen des Bearbeitungselements können über die einhergehende Belastungsänderung, insbesondere Momentenänderung, detektiert werden. Eine für den Stand der Technik erforderliche separate Sensorik für die Steuerung und Überwachung des Bearbeitungsprozesses ist dank der in den Roboter integrierten Sensorik entbehrlich.

Mittels der genannten Sensorik kann der Roboter außerdem eine oder mehrere nachgiebige Roboterachsen mit einer Nachgiebigkeitsregelung, insbesondere einer reinen Kraftregelung oder einer Kombination aus Positions- und Kraftregelung aufweisen. Hierdurch können einerseits Werkzeugüberlastungen vermieden werden. Insbesondere der Vorschub lässt sich optimal an die jeweiligen Prozessgegebenheiten anpassen. Außerdem ist eine solche Nachgiebigkeitsregelung zur Vermeidung von Unfällen oder Beschädigungen des Bearbeitungswerkzeugs von Vorteil. Sie erleichtert und vereinfacht außerdem das Teachen des Roboters mit dem Bearbeitungswerkzeug.

Das beanspruchte Bearbeitungswerkzeug kann außerdem als Abstützung und Positionierhilfe für eigene Fortbewegungen und Ortsveränderungen des Roboters benutzt werden, der hierfür z.B. auf einem entsprechend geeigneten Transportmittel angeordnet und mit diesem gegenüber dem Untergrund beweglich ist. Eine Steuerung kann hierbei über die integrierte und Achspositionen detektierende Sensorik in Verbindung mit einer entsprechenden Steuerungsprogrammierung erfolgen. Auch eine Schablone mit Durchgangsöffnungen und deren definierter Position ist hierfür von Vorteil. Die Positionierung kann hierbei relativ zum Werkstück erfolgen, kann aber auch eine absolute Positionierung im Raum sein.

Das beanspruchte Bearbeitungswerkzeug und das Bearbeitungsverfahren sowie die ggf. zugeordnete Handhabungseinrichtung sind für unterschiedliche Arten von Bearbeitungsprozessen geeignet und ausgebildet. Dies kann z.B. ein Bohrprozess sein. Alternativ ist ein anderer spanabhebender Prozess bei entsprechender Werkzeuggestaltung möglich. Für einen Bearbeitungsprozess kann außerdem auf eine Eigenbewegung des Bearbeitungselements und auf einen zugehörigen Antrieb verzichtet werden, wobei lediglich der Vorschub und dessen Verstärkung benutzt wird. Ein solcher Prozess kann z.B. ein Pressen oder Andrücken von Werkstückteilen mit einem als Druckstempel ausgebildeten Bearbeitungselement sein. Alternativ ist auch eine kinematische Umkehr und ein Ziehprozess möglich.

In einer Ausführungsform ist der Antrieb des Bearbeitungselements mit der Stützeinrichtung des Bearbeitungswerkzeugs verbunden und durch eine Antriebsübertragung, z.B. eine Keilwelle oder Polygonwelle, mit dem vorgeschobenen Bearbeitungselement verbunden.

Erfindunsgemäß ist die Verstärkungseinrichtung der Vorschubeinrichtung zugeordnet, vorzugsweise in diese integriert. Außerdem weist die Verstärkungseinrichtung eine Übersetzung (22) auf, welche ein mit dem Anschluss verbundenes antreibendes Betätigungselement und ein mit dem Bearbeitungselement verbundenes abtreibendes Betätigungselement aufweist. Eine fluidische, insbesondere hydraulische Übersetzung kann z.B. einen antreibenden Zylinder und einen fluidisch gekoppelten abtreibenden Zylinder aufweisen, wobei die Zylinder korrespondierende Volumina bei unterschiedlich großen Kolben haben und die Betätigungselemente als Kolbenstangen ausgebildet sind. Vorteilhafterweise kann eine fluidische, insbesondere hydraulische Übersetzung eine Entlüftung (27) mit einer Überdruckeinheit beinhalten.

In einer Ausführung weist die Verstärkungseinrichtung eine Rückstellung auf. Bei einem Ausführungsbeispiel hat die Vorschubeinrichtung einen Anschlag zur Vorschubbegrenzung, der vorzugsweise dem abtreibenden Vorschubelement, insbesondere einer Vorschubbrücke, zugeordnet ist. Die Vorschubeinrichtung kann eine steuerbare Fixiereinrichtung aufweisen. Vorteilhaft ist es, wenn die Vorschubelemente linear und gleich gerichtet beweglich sind und an Vorschubführungen, insbesondere einer Brückenführung und einer Schlittenführung, gelagert sind. Bei einem Ausführungsbeispiel besitzt die Vorschubeinrichtung eine steuerbare Fixiereinrichtung. Eine Ausführungsvariante sieht die Anordnung einer Spanneinrichtung an der Stützeinrichtung vor. Vorteilhafterweise kann eine solche Spanneinrichtung ein bewegliches Spannmittel, insbesondere eine Spannhülse, am werkstückseitigen Ende des Stützmittels sowie eine steuerbare Betätigung für das Spannmittel aufweisen.

Eine bevorzugte Ausführungsform einer Bearbeitungsvorrichtung sieht einen mehrgliedrigen, mehrachsigen und programmierbaren Roboter, insbesondere einen Leichtbauroboter, vor. Bei einer Ausbildung als Gelenkarmroboter können dessen Roboterachsen (I - VII) jeweils ein Lager, insbesondere ein Drehlager, und einen hier zugeordneten steuerbaren oder regelbaren Achsantrieb, insbesondere Drehantrieb, mit einer Sensorik aufweisen. In einer Ausführung weist der Roboter mindestens eine nachgiebige Roboterachse (I - VII) mit einer Nachgiebigkeitsregelung, insbesondere einer reinen Kraftregelung oder einer Kombination aus Positions- und Kraftregelung, auf. Die Roboterachsen (I - VII) können ferner eine steuer- oder schaltbare Bremse aufweisen.

In den Unteransprüchen sind weitere vorteilhafte Ausgestaltungen der Erfindung angegeben.

Die Erfindung ist in den Zeichnungen beispielhaft und schematisch dargestellt. Im Einzelnen zeigen:
- Figur 1:: ein Bearbeitungswerkzeug mit einem Leichtbauroboter in perspektivischer Ansicht,
- Figur 2:: eine vergrößerte Darstellung des Bearbeitungswerkzeugs von Figur 1,
- Figur 3:: eine perspektivische Darstellung des teilweise aufgebrochenen Bearbeitungswerkzeugs von Figur 1 und 2,
- Figur 4 und 5:: eine Verstärkungseinrichtung des Bearbeitungswerkzeugs von Figur 1 bis 3 in geschlossener und aufgebrochener Darstellung sowie in perspektivischer Ansicht,
- Figur 6:: einen Längsschnitt durch die Verstärkungseinrichtung von Figur 4 und 5 und
- Figur 7:: einen zentralen Längsschnitt durch das Bearbeitungswerkzeug und ein Werkstück mit Schablone gemäß Figur 1.

Die Erfindung betrifft ein Bearbeitungswerkzeug (1), ein Bearbeitungsverfahren und eine mit einem solchen Bearbeitungswerkzeug (1) und einer Handhabungseinrichtung (10) ausgestattete Bearbeitungsvorrichtung (2).

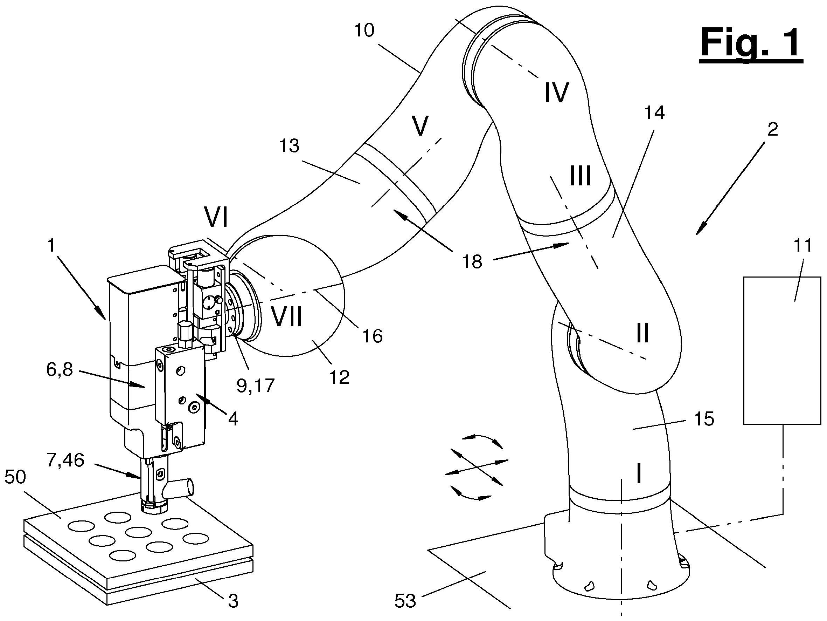

Figur 1 zeigt ein Bearbeitungswerkzeug (1) mit einem hiervon beaufschlagten Werkstück (3) nebst einer dem Werkstück (3) zugeordneten Schablone (50). Das Bearbeitungswerkzeug (1) weist eine mit dem Anschluss (9) verbundene Vorschubeinrichtung (8) für den Vorschub eines Bearbeitungselements (5) zur Bearbeitung des Werkstücks (3) auf. Der Vorschub wird durch eine Bewegung der mit dem Anschluss (9) verbundenen Handhabungseinrichtung (10) erzeugt. Das Bearbeitungswerkzeug (1) weist ferner eine Verstärkungseinrichtung (4) für den Vorschub, insbesondere für die Vorschubkraft, des Bearbeitungselements (5) auf. Die Verstärkungseinrichtung (4) ist der Vorschubeinrichtung (8) zugeordnet und insbesondere in diese integriert.

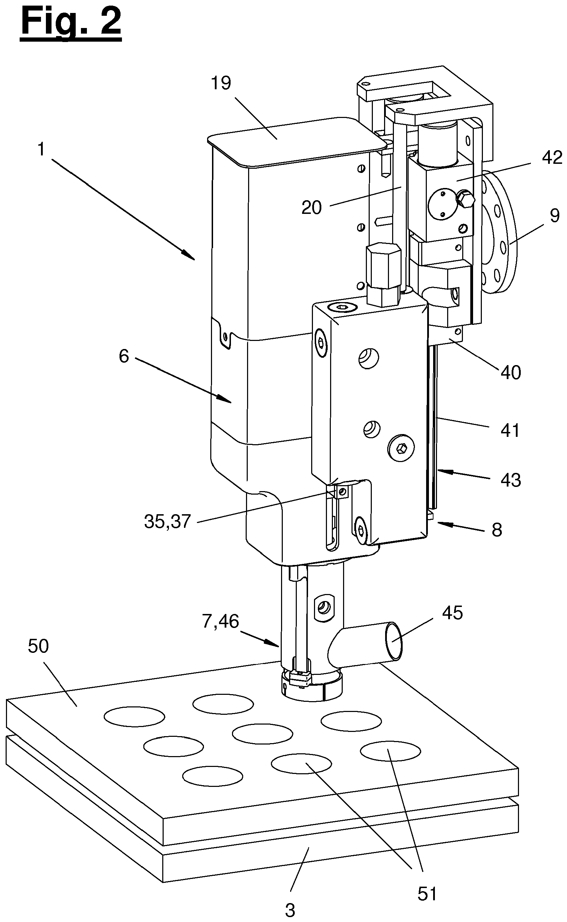

Das Bearbeitungswerkzeug (1) kann ferner eine Stützeinrichtung (7) sowie ggf. eine Spanneinrichtung (46) für eine werkstückseitige Abstützung und Fixierung aufweisen. Außerdem kann das Bearbeitungswerkzeug (1) einen Antrieb (6) für eine Eigenbewegung des vorgeschobenen Bearbeitungselements (5), z.B. für eine Drehbewegung, aufweisen. Die vorgenannten Komponenten des Bearbeitungswerkzeugs (1) sind in den Zeichnungen der Figur 2 bis 7 im einzelnen dargestellt und werden nachfolgend beschrieben.

Das Bearbeitungswerkzeug (1) und das vorgeschobene Bearbeitungselement (5) können eine unterschiedliche Ausbildung für unterschiedliche Bearbeitungsprozesse haben. Im gezeigten Ausführungsbeispiel ist das Bearbeitungswerkzeug (1) als Bohrwerkzeug und das Bearbeitungselement (5) als Bohrelement ausgebildet. Die vorerwähnte Eigenbewegung des Bohrelements (5) ist eine Drehbewegung. Anderer geeignete Werkzeug- und Prozessausbildungen betreffen andere Arten von spanabhebenden Bearbeitungstechniken, z.B. Schleifen, Fräsen, Schneiden, Reiben oder dergleichen. Auch Umformtechniken, Fügetechniken oder dergleichen sind realisierbar. Grundsätzlich ist jede Bearbeitungstechnik angesprochen, die einen Vorschub eines Bearbeitungselements mit einer erforderlichen Vorschubkraft beinhaltet.

Die Handhabungseinrichtung (10) ist vorzugsweise mehrachsig und programmierbar. Sie kann eine beliebige Zahl und Kombination von rotatorischen und/oder translatorischen Roboterachsen aufweisen und kann mit einer in Figur 1 schematisch dargestellten Steuerung (11), insbesondere einer Robotersteuerung, zur Steuerung und ggf. Regelung der Roboterachsen verbunden sein. Die Robotersteuerung (11) kann eine Recheneinheit, einen oder mehrere Speicher für Daten oder Programme sowie Eingabe- und Ausgabeeinheiten aufweist. Sie kann prozessrelevante Daten, z.B. Sensordaten, speichern und für eine Qualitätskontrolle und -sicherung protokollieren.

An die Steuerung (11) kann auch das Bearbeitungswerkzeug (1) mit einer oder mehreren Komponenten, z.B. ein Antrieb (6), eine Spanneinrichtung (46), eine Fixiereinrichtung (42), eine Rückholung (39) oder dgl. angeschlossen und z.B. als zusätzliche Roboterachse(n) implementiert sein. Die Handhabungseinrichtung (10) kann stationär oder mittels eines Transportmittels (53) ortsveränderlich an einem Untergrund angeordnet sein. Die Pfeile in Figur 1 verdeutlichen beispielhaft die hierdurch gegebenen translatorischen und/oder rotatorischen Bewegungsmöglichkeiten.

Die Handhabungseinrichtung (10) mit dem angeschlossenen Bearbeitungswerkzeug (1) kann eine Arbeitsvorrichtung (3) bilden. Die Handhabungseinrichtung (10) ist in der gezeigten Ausführungsform von Figur 1 als mehrachsiger und programmierbarer Roboter ausgebildet. Die nachfolgende Beschreibung des Roboters gilt mit entsprechender Anpassung auch für andere Arten von Handhabungseinrichtungen (10).

Figur 1 zeigt eine spezielle Ausführung als Leichtbauroboter. Der Roboter kann ferner eine oder mehrere kraftgesteuerte oder kraftgeregelte Roboterachsen, hier z.B. sieben Achsen (I - VII) aufweisen. Ferner können eine oder mehrere nachgiebige Roboterachsen mit einer Nachgiebigkeitsregelung vorhanden sein. Die Achsen (I - VII) weisen jeweils ein Drehlager und einen hier zugeordneten steuerbaren oder regelbaren Antrieb nebst einer Sensorik (18) auf. Die Roboterachsen (I- VII) können außerdem eine steuer- oder schaltbare Bremse aufweisen. Nachfolgend werden hierzu weitere Details erläutert.

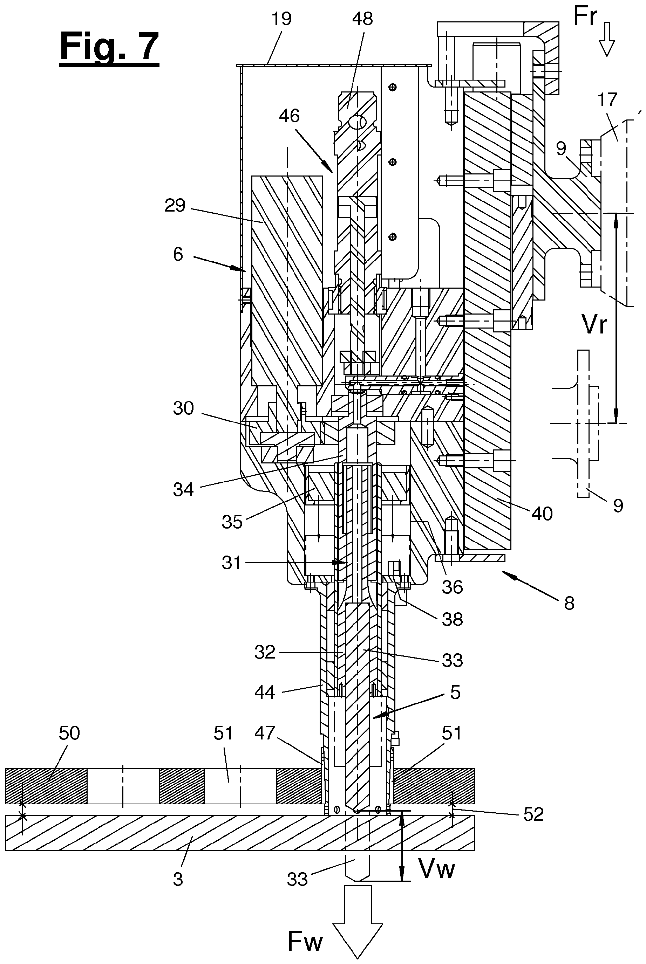

Der Roboter (10) entwickelt u.U. nur eine relativ geringe, am Anschluss (9) wirkende Zustell- und Vorschubkraft, die für den Vorschub des Bearbeitungselements (5) nicht ausreicht oder die eine unerwünscht hohe Achsbelastung mit sich bringt. Die Verstärkungseinrichtung (4) leistet hier Abhilfe, indem sie gemäß Figur 7 eine Vorschubbewegung des Roboters (10) mit kleiner Kraft Fr und großem Weg Vr in eine Vorschubbewegung des Bearbeitungselements (5) mit größerer Vorschubkraft Fw und kleinerem Vorschubweg Vw übersetzt. Die Vorschubbewegungen sind vorzugsweise linear und parallel ausgerichtet.

Figur 2 bis 7 zeigen Details des Bearbeitungswerkzeugs (1) und seiner Komponenten in Außenansichten und in teilweise aufgebrochenen oder geschnittenen Darstellungen.

Die Verstärkungseinrichtung (4) ist zwischen dem flanschartigen Anschluss (9) und dem Bearbeitungselement (5) angeordnet. Sie ist der Vorschubeinrichtung (8) zugeordnet und insbesondere in diese integriert.

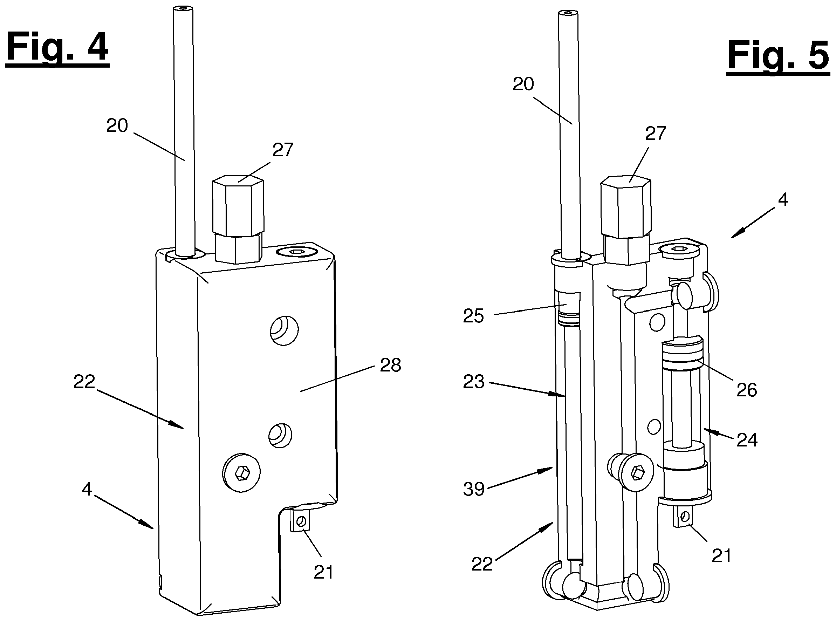

Figur 4 bis 6 verdeutlichen die Einzelheiten der Verstärkungseinrichtung (4). In den anderen Figuren sind nur Teile der Verstärkungseinrichtung (4) zu sehen.

Die Verstärkungseinrichtung (4) weist gemäß Figur 4 ein Gehäuse (28) auf, aus dem ein antreibendes Betätigungselement (20) und ein abtreibendes Betätigungselement (21) ragen, die mit einem roboterseitig antreibenden Vorschubelement (40) und einem werkzeugseitig abtreibenden Vorschubelement (35) verbunden sind sowie im weiteren mit dem Anschluss (9) und dem Bearbeitungselement (5) verbunden sind. Die Verstärkungseinrichtung (4) weist eine Übersetzung (22) zwischen den stangenartigen Betätigungselementen (20,21) auf.

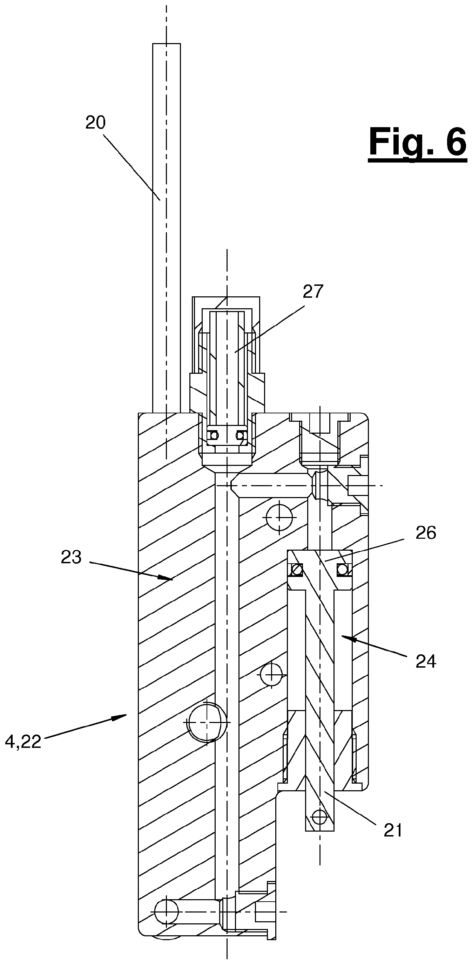

Wie Figur 5 und 6 verdeutlichen, ist dies im gezeigten Ausführungsbeispiel eine fluidische, insbesondere hydraulische Übersetzung (22), die einen antreibenden Zylinder (23) und einen abtreibenden Zylinder (24) aufweisen, die untereinander durch Leitungen verbunden sind, die ein Überströmen des Fluids vom antreibenden Zylinder (23) zum abtreibenden Zylinder (24) ermöglichen. Die Betätigungselemente (20,21) sind als Kolbenstangen ausgebildet. An den Fluidleitungen kann eine Entlüftung (27) mit einer Überdruckeinheit angeordnet sein. Die Verstärkungseinrichtung (4) kann auch eine nur schematisch durch einen Pfeil angedeutete und nicht näher dargestellte Rückstellung (39), z.B. eine Feder oder eine steuerbares Rückstellelement, zur Rückholung nach Vorschub aufweisen.

Der antreibende Kolben (25) hat eine wirksame Flächengröße, die entsprechend des gewünschten Übersetzungsverhältnisses kleiner als die wirksame Fläche des abtreibenden Kolbens (26) ist. Die Länge des antreibenden Zylinders (23) ist entsprechend größer als diejenige des abtreibenden Zylinders (24). Die Volumina der Zylinder (23,24) können im wesentlichen gleich groß sein. Durch die Übersetzung (22) werden die vorbeschriebenen Kraft- und Wegverhältnisse Vr/Vw und Fr/Fw erzielt und eingestellt. Alternativ zum gezeigten Ausführungsbeispiel kann die Übersetzung (22) in anderer Weise ausgebildet sein, z.B. als Zahnradgetriebe.

Die Vorschubeinrichtung (8) weist ein mit dem Anschluss (9) verbundenes bewegliches Vorschubelement (40) auf, das über einen Mitnehmer oder dergleichen auf das hochragende Betätigungselement (20) einwirkt. Für das Vorschubelement (40) ist eine vorzugsweise lineare Vorschublagerung (41) vorgesehen, die mit einem Gehäuse oder Gestell (19) des Bearbeitungswerkzeugs (1) verbunden ist, in welchem wiederum die nachfolgend beschriebene Stützeinrichtung (7) angeschlossen ist. Das Vorschubelement (40) ist z.B. als Schlitten und die Vorschublagerung als Schlittenführung ausgebildet. Dem Vorschubelement (40) kann eine geeignete Sensorik (43) zur Wegmessung, ein Endschalter oder dgl. zugeordnet sein. Für das Vorschubelement (40) kann ferner eine steuerbare Fixiereinrichtung (42), z.B. in Form einer Klemmeinrichtung, vorhanden sein, welche bei Betätigung die Vorschubeinrichtung (8) und deren Beweglichkeit blockiert, so dass eine starre Verbindung zwischen Anschluss (9) und Bearbeitungselement (5) zum Zwecke einer Zustellung des Bearbeitungswerkzeugs (1) oder dergleichen hergestellt wird.

Die Vorschubeinrichtung (8) weist ferner ein mit dem Bearbeitungselement (5) verbundenes Vorschubelement (35) auf, welches mittels einer Vorschubführung (36) im Gehäuse (19) geführt und gelagert ist. Das Vorschubelement (35) ist z.B. als kolbenartige Vorschubbrücke ausgebildet, die in der Vorschubführung (36), z.B. einer zylinderartigen Brückenführung, linear beweglich gehalten und geführt ist. Die Vorschubführung (36) kann einen Anschlag (38) zur Vorschubbegrenzung aufweisen, der z.B. am Zylinderboden ausgebildet ist. Die Entlüftung (27) kann im Anschlagfall eine Überlastung der fluidischen Übersetzung (22) verhindern.

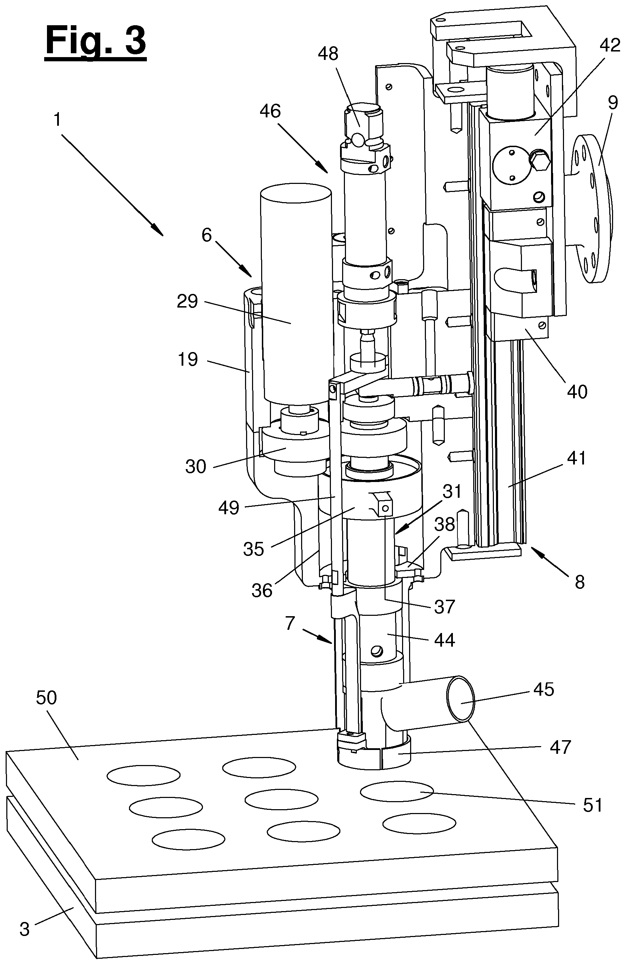

Das abtreibende Vorschubelement (35) ist eingangseitig mit dem abtreibenden Betätigungselement (21) der Verstärkungseinrichtung (4) verbunden und weist hierfür z.B. einen Mitnehmer (37) auf, der durch einen Schlitz in der Wand des Gehäuses (19) nach außen ragt und mit dem Betätigungselement (21) verbunden ist. Figur 2 und 3 zeigen diese Anordnung. Ausgangseitig oder abtriebseitig ist das Vorschubelement (35) mit dem Bearbeitungselement (5) verbunden.

Das Bearbeitungselement (5) besteht z.B. gemäß Figur 7 aus einem Bohrer (33), der in einer koaxial rotierenden Bohrspindel (32) drehschlüssig gehalten ist. Die Bohrspindel (32) ist ihrerseits mit dem abtreibenden Vorschubelement (35) über eine außenseitige Hülse verbunden, welche die Vorschubbewegung auf die Bohrspindel (32) und den Bohrer (33) überträgt.

Das Bearbeitungswerkzeug (1) weist den vorerwähnten, einzeln oder mehrfach vorhandenen Antrieb (6) für eine überlagerte Werkzeugbewegung auf. Wie Figur 3 und 7 verdeutlichen, ist der Antrieb (6) als Drehantrieb ausgebildet und weist einen Motor (29), z.B. einen pneumatischen Antriebsmotor und ein Getriebe (30) auf, welches mit einer Aufnahme (34) für das Betätigungselement (5) verbunden ist. Hierbei kann eine Antriebsübertragung (31) zwischengeschaltet sein, welche eine Überlagerung der drehenden Antriebsbewegung und der linearen Vorschubbewegung des Bearbeitungselements (5) ermöglicht. Sie kann hierfür z.B. als Keilwelle oder als Polygonwelle ausgebildet sein.

Im vorliegenden Fall einer Bohrspindel (32) ist die Aufnahme (34) als Spindelaufnahme ausgebildet, die hülsenartig die Bohrspindel (32) übergreift und mit dieser über die Antriebsübertragung (31) drehschlüssig und dabei axial beweglich verbunden ist. Der Bohrer (3), die Bohrspindel (32), die Aufnahme (34) und das Vorschubelement (35) sind koaxial angeordnet und erstrecken sich in vertikaler Vorschubrichtung. Der Motor (29) ist parallel dazu angeordnet.

Die Vorschubelemente (35,40) sind relativ zu der Stützeinrichtung (7) beweglich gelagert. Die Verstärkungseinrichtung (4) ist mit ihrem eigenen Gehäuse (28) ggf. außenseitig am Gehäuse (19) angeschlossen und dadurch ebenfalls mit der Stützeinrichtung (7) verbunden. Hierüber kann die Verstärkungseinrichtung (4) Abstützung in Arbeitsstellung am Werkstück (3) oder an der zugeordneten Schablone (50) erhalten.

Die Stützeinrichtung (7) weist ein Stützmittel (44) auf. Dieses ist z.B. als Stützrohr ausgebildet und umgibt konzentrisch das Bearbeitungselement (5) und ggf. die Antriebsübertragung (31). In der gezeigten Ausführungsform einer Bohrspindel (32) kann letztere an der Innenseite des Stützrohrs (44) axial geführt sein. Am Stützrohr (44) kann außerdem ein Stutzen einer Absaugung (45) zum Entfernen der Bohrspäne angeordnet sein.

Die Stützeinrichtung (7) kann mit einer Spanneinrichtung (46) zusammenwirken, welche eine Fixierung der Stützeinrichtung (7), insbesondere des Stützmittels (44), in Arbeitsstellung am Werkstück (3) oder an einer Schablone (50) ermöglicht. Die z.B. spannzangenartige Spanneinrichtung (46) weist hierfür ein Spannmittel (47) am werkstückseitigen Ende des Stützmittels (44) auf, das z.B. als Spannhülse ausgebildet ist und eine konische Form haben kann. Das Spannmittel (47) kann mittels einer steuerbaren Betätigung (48) aktiviert und deaktiviert werden. Die Betätigung (48) ist z.B. als Hubeinheit ausgebildet und im Gehäuse (19) angeordnet. Sie steht mit dem Spannmittel (47) mittels einer Übertragung (49), z.B. einem Gestänge, in treibender Verbindung. Die Hubeinheit (48) kann die Spannhülse (47) axial am Stützrohr (44) nach oben ziehen und dadurch aufweiten, wobei die Spannhülse (47) sich in einer Durchgangsöffnung (51) der Schablone (50) festklemmt und dadurch auch das Stützmittel (44) fixiert. Die Spanntechnik kann ansonsten in anderer geeigneter Weise ausgeführt sein.

Die Schablone (50) kann über eine Befestigung (52) am Werkstück (3) oder an anderer geeigneter Stelle fixiert und abgestützt werden. Die Schablone (50) kann eine oder mehrere Durchgangsöffnungen (51) aufweisen, deren Position mit den ein oder mehreren Bearbeitungsstellen am Werkstück (3) korrespondiert. Die eine oder mehreren Öffnungen (51) wirken mit dem Bearbeitungswerkzeug (1), insbesondere mit dessen Stützeinrichtung (7) und ggf. mit dessen Spanneinrichtung (46) zusammen.

Der Roboter (6) kann in der eingangs beschriebenen Weise auf einem Transportmittel (53) angeordnet sein, welches auf einem Untergrund mehrachsig beweglich ist. Hierbei kann es sich um ein Fahrzeug, eine Luft- oder Gleitkisseneinheit, Schlittenanordnung oder dgl. handeln. Der Antrieb für die Transportbewegung kann vom Roboter (10) selbst erzeugt werden, wobei er sein Bearbeitungswerkzeug (1) und die Schablone (50) zum Abstecken und Abstützen einsetzen kann. Dadurch kann er sich an ein u.U. lang gestreckten Werkstück (3) entlang bewegen und auch Bearbeitungsstellen erreichen, die außerhalb seines normalen Arbeitsbereiches liegen. Für seine Fortbewegung steckt der Roboter (10) in einer Streckstellung das Bearbeitungswerkzeug (1) in eine Durchgangsöffnung (51) und fixiert sich dort über die Stütz- und Spanneinrichtung (7,46). Anschließend zieht sich der Roboter (10) in einer Kontraktionsbewegung durch seine Roboterachsen zu dieser Fixier- und Ankerstelle hin, wobei er seine Position über die detektierten Achsstellungen erfassen und verfolgen kann. Anschließend kann der Roboter (10) wieder seine Arbeitsstellung für den nächsten Prozess oder ggf. eine erneute Streckstellung einnehmen und sich in der beschriebenen Weise an der nächsten Öffnung (51) verankern und fixieren. Dank der vorbeschriebenen Fixierung ist für die Werkstückbearbeitung keine separate Lagefixierung des Transportmittels (53) im Prozess erforderlich. Es kann allerdings ein entsprechendes Fixiermittel, z.B. eine Absteckung, eine Bremse oder dergleichen vorhanden sein.

Figur 1 zeigt die vorerwähnte bevorzugte Ausführungsform eines Roboters (10), der hier als Leichtbauroboter ausgebildet ist. Er besteht aus leichtgewichtigen Materialien, z.B. Leichtmetallen und Kunststoff und hat auch eine kleine Baugröße. Er hat ein niedriges Gewicht und eine entsprechend begrenzte Tragkraft, die z.B. bis zu 20 kg beträgt. Ein solcher Leichtbauroboter mit einem Gewicht von Roboter (10) und Werkzeug (1) von z.B. unter 50 kg, insbesondere von ca. 30 kg, kann mobil sein und kann sich manuell von einem Einsatzort zu einem anderen transportieren lassen.

Der gezeigte Roboter (10) weist mehrere bewegliche und miteinander verbundene Glieder (12,13,14,15) auf. Diese sind vorzugsweise gelenkig und über die besagten drehenden Roboterachsen (I - VII) miteinander verbunden. Ferner können einzelne Glieder (13,14) mehrteilig und in sich beweglich ausgebildet sein. Die Roboterachsen (I - VII) und ihre Achsantriebe, insbesondere Drehantriebe sowie die Sensorik (18), sind mit der Robotersteuerung (11) verbunden, welche die Antriebe bzw. Achsantriebe steuern und regeln kann. Das abtriebsseitige Endglied (12) des Roboters (10) ist z.B. als Roboterhand ausgebildet und weist ein um eine Drehachse (16) drehbares Abtriebselement (17), z.B. einen Abtriebsflansch, auf. Die Drehachse (16) bildet die letzte Roboterachse VII. Am Abtriebselement (17) ist das Werkzeug (1) montiert. Durch ein ggf. hohles Abtriebselement (17) und ggf. andere Roboterglieder (13,14,15) können eine oder mehrere Leitungen für Betriebsmittel, z.B. Leistungs- und Signalströme, Fluide etc. geführt sein und am Flansch (17) nach außen treten sowie am Werkzeug (1) angeschlossen werden.

Die vorgenannte Kraftsteuerung oder Kraftregelung der Roboterachsen (I - VII) bezieht sich auf die Wirkung nach außen am Abtriebselement (17) des Endglieds (12) sowie auf die dort einwirkenden Reaktionskräfte. Roboterintern findet an den drehenden Achsen oder Achsantrieben eine Momentensteuerung oder Momentenregelung statt.

Der Roboter (10) hat vorzugsweise drei oder mehr bewegliche Glieder (12,13,14,15). Im gezeigten Ausführungsbeispiel weist er ein mit einem Untergrund oder dem Transportmittel (53) verbundenes Basisglied (15) und das vorerwähnte Endglied (12) sowie zwei Zwischenglieder (13,14) auf, welche mehrteilig und in sich verdrehbar mittels Achsen III und V ausgebildet sind. Die Zahl der Zwischenglieder (13,14) kann alternativ kleiner oder größer sein. In weiterer Abwandlung können einzelne oder alle Zwischenglieder (13,14) in sich drehfest und ohne zusätzliche Achse ausgebildet sein.

Die Sensorik (18) kann z.B. einen oder mehreren Sensoren an einer oder mehreren Achsen (I - VII) aufweisen. Diese Sensoren können die gleiche oder unterschiedliche Funktionen haben. Sie können insbesondere als Kraft- oder Momentensensoren ausgebildet sein und zum Erfassen von Belastungen, insbesondere Momenten, ausgebildet sein, die von außen auf den Roboter über das Abtriebselement (17) einwirken. Die Sensoren können ferner Drehbewegungen und ggf. Drehpositionen detektieren.

Mittels der Sensorik (18) kann von der Steuerung (11) die vorgenannte Nachgiebigkeitsregelung realisiert werden. Hierdurch kann einerseits der Roboter (10) das Werkzeug (1) bei der Zustellung federnd und ausweichfähig halten und führen, wobei z.B. Crashs und insbesondere Unfälle mit Personen vermieden werden können. Die Eigenschaft kann auch zum manuellen Teachen und Programmieren benutzt werden mit dem Vorteil einer schnellen und einfachen Programmierung, Inbetriebnahme sowie Anpassbarkeit an unterschiedliche Werkzeuge (1) und damit auszuführende Prozesse und Jobs. Über eine Belastungserfassung der Sensorik (18) kann außerdem das Suchen und Finden von Arbeitspositionen und auch von Absteckstellen an den Öffnungen (51) unterstützt und erleichtert werden. Auch Winkelfehler in der Relativstellung der Glieder (12,13,14,15) können detektiert und bedarfsweise korrigiert werden.

Die Sensorik (18) kann ferner zur Überprüfung der Formhaltigkeit und Funktionsfähigkeit des Werkzeugs (1) benutzt werden. Der Roboter (10) kann z.B. das Werkzeug (1) mit den zu überprüfenden Elementen, insbesondere dem Stützmittel (44), an einem Referenzpunkt mit bekannter Position in einen leichten Berührungskontakt bringen, wobei die Roboterbewegung und -position überwacht und eine Berührung mittels der Sensorik (18) detektiert wird. Durch die Nachgiebigkeitsregelung werden schadensträchtige Kollisionen vermieden und die Roboterbewegung bei Überschreiten einer vorgegebenen Belastungsschwelle gestoppt oder abgeschaltet. Durch Vergleich der Soll- und Istposition des Roboters bei mittels Sensorik (18) detektiertem Kontakt kann festgestellt werden, ob ein Werkzeug (1) intakt oder beschädigt ist und ob insbesondere der programmierte Tool-Center-Point (TCP) des Werkzeugs (1) sich noch an der vorgesehenen Position befindet.

Ferner kann beim Vorschub durch Überwachung der aufgetretenen Belastungen die korrekte Funktion des Bearbeitungswerkzeugs (1) und seiner Komponenten kontrolliert werden. Auch die Wirkung des Bearbeitungselements (5) und der Bearbeitungsprozess können über eine Belastungsdetektion überwacht werden.

Abwandlungen der gezeigten und beschriebenen Ausführungsformen sind in verschiedener Weise möglich. Die Merkmale der Ausführungsbeispiele können untereinander vertauscht und kombiniert werden.

Der Roboter (6) kann in der eingangs beschriebenen Weise auf einem Transportmittel (53) angeordnet sein, welches auf einem Untergrund mehrachsig beweglich ist. Hierbei kann es sich um ein Fahrzeug, eine Luftkisseneinheit oder dergleichen handeln. Der Antrieb für die Fahrbewegung kann vom Roboter (6) selbst erzeugt werden, wobei er sein Bearbeitungswerkzeug (1) und die Schablone (50) einsetzten kann. Dadurch kann er sich an einem u.U. lang gestreckten Werkzeug (3) entlang bewegen und auch Bearbeitungsstellen erreichen, die außerhalb seines normalen Arbeitsbereiches liegen. Zur Fortbewegung steckt der Roboter (6) das Bearbeitungswerkzeug (1) in eine Durchgangsöffnung (51) und fixiert sich dort über die Stütz- und Spanneinrichtung (7,46). Anschließend zieht sich der Roboter (6) durch eine Bewegung seiner Roboterachse zu dieser Fixier- und Ankerstelle hin, wobei er seine Position über die detektierten Achsstellungen erfassen und verfolgen kann. Anschließend kann der Roboter (6) wieder eine Streckstellung einnehmen und sich in der beschriebenen Weise an der nächsten Öffnung (51) verankern und fixieren. Dank der vorbeschriebenen Fixierung ist für die Werkstückbearbeitung keine separate Lagefixierung des Transportmittels (53) im Prozess erforderlich. Es kann allerdings ein Fixiermittel, z.B. eine Absteckung, eine Bremse oder dergleichen vorhanden sein.

### BEZUGSZEICHENLISTE

- 1: Bearbeitungswerkzeug, Bohrwerkzeug
- 2: Bearbeitungsvorrichtung, Bohrvorrichtung
- 3: Werkstück
- 4: Verstärkungseinrichtung
- 5: Bearbeitungselement, Bohrelement
- 6: Antrieb, Drehantrieb
- 7: Stützeinrichtung
- 8: Vorschubeinrichtung
- 9: Anschluss für Roboter
- 10: Handhabungseinrichtung, Roboter, Leichtbauroboter
- 11: Steuerung, Robotersteuerung
- 12: Glied, Endglied, Hand
- 13: Glied, Zwischenglied
- 14: Glied, Zwischenglied
- 15: Glied, Basisglied
- 16: Drehachse
- 17: Abtriebselement, Flansch
- 18: Sensorik an Roboter
- 19: Gehäuse von Bearbeitungswerkzeug
- 20: Betätigungselement antreibend, Kolbenstange
- 21: Betätigungselement abtreibend, Kolbenstange
- 22: Übersetzung hydraulisch
- 23: Zylinder antreibend
- 24: Zylinder abtreibend
- 25: Kolben antreibend
- 26: Kolben abtreibend
- 27: Entlüftung
- 28: Gehäuse von Verstärkungseinrichtung
- 29: Motor
- 30: Getriebe
- 31: Antriebsübertragung
- 32: Bohrspindel
- 33: Bohrer
- 34: Aufnahme, Spindelaufnahme
- 35: Vorschubelement abtreibend, Vorschubbrücke
- 36: Vorschubführung, Brückenführung
- 37: Mitnehmer
- 38: Anschlag
- 39: Rückstellung Verstärkungseinrichtung
- 40: Vorschubelement antreibend, Schlitten
- 41: Vorschubführung, Schlittenführung
- 42: Fixiereinrichtung, Klemmeinrichtung
- 43: Sensorik für Vorschubeinrichtung
- 44: Stützmittel, Stützrohr
- 45: Absaugung
- 46: Spanneinrichtung
- 47: Spannmittel, Spannhülse
- 48: Betätigung, Hubeinheit
- 49: Übertragung, Gestänge
- 50: Schablone
- 51: Öffnung in Schablone
- 52: Befestigung
- 53: Transportmittel für Roboter

- I - VII: Achse von Roboter
- Vr: Vorschubweg Roboter
- Vw: Vorschubweg Werkzeug
- Fr: Vorschubkraft Roboter
- Fw: Vorschubkraft Werkzeug

## Patentansprüche

1. Bearbeitungswerkzeug, insbesondere Bohrwerkzeug, mit einem auf ein Werkstück (3) einwirkenden Bearbeitungselement (5) und einem Anschluss (9) für eine Handhabungseinrichtung (10), insbesondere einen Roboter, wobei das Bearbeitungswerkzeug (1) eine mit dem Anschluss (9) verbundene Vorschubeinrichtung (8) für den Vorschub des Bearbeitungselements (5) durch eine Bewegung der mit dem Anschluss (9) verbundenen Handhabungseinrichtung (10) aufweist, **dadurch gekennzeichnet, dass das Bearbeitungswerkzeug (1) eine Verstärkungseinrichtung (4) für den Vorschub, insbesondere für die Vorschubkraft, des Bearbeitungselements (5) aufweist,** wobei **die Verstärkungseinrichtung (4) der Vorschubeinrichtung (8) zugeordnet, vorzugsweise in diese integriert ist** und wobei **die Verstärkungseinrichtung (4) eine Übersetzung (22) aufweist, welche ein mit dem Anschluss (9) verbundenes antreibendes Betätigungselement (20) und ein mit dem Bearbeitungselement (5) verbundenes abtreibendes Betätigungselement (21) aufweist.**

2. Bearbeitungswerkzeug nach Anspruch 1, **dadurch gekennzeichnet, dass** das Bearbeitungswerkzeug (1) eine Stützeinrichtung (7) für eine werkstückseitige Abstützung aufweist.

3. Bearbeitungswerkzeug nach Anspruch 1 oder 2, **dadurch gekennzeichnet, dass** das Bearbeitungswerkzeug (1) einen steuerbaren Antrieb (6), insbesondere einen Drehantrieb, für eine Eigenbewegung des Bearbeitungselements (5) aufweist.

4. Bearbeitungswerkzeug nach einem der vorhergehenden Ansprüche, **dadurch gekennzeichnet, dass** die Verstärkungseinrichtung (4) zwischen dem Anschluss (9) und dem Bearbeitungselement (5) angeordnet ist und eine fluidische, insbesondere hydraulische, oder eine mechanische Übersetzung (22) aufweist.

5. Bearbeitungswerkzeug nach einem der vorhergehenden Ansprüche, **dadurch gekennzeichnet, dass** die Vorschubeinrichtung (8) ein mit dem Anschluss (9) verbundenes bewegliches Vorschubelement (40), insbesondere eine Schlitten, und ein mit dem Bearbeitungselement (5) verbundenes Vorschubelement (33), insbesondere eine Vorschubbrücke, aufweist, wobei die Vorschubelemente (33,40) relativ zur Stützeinrichtung (7) beweglich gelagert und mit den Betätigungselementen (20,21) der Verstärkungseinrichtung (4) verbunden sind.

6. Bearbeitungswerkzeug nach Anspruch 5, **dadurch gekennzeichnet, dass** das Bearbeitungselement (5) eine Bohrspindel (32) mit einem Bohrer (33) aufweist, wobei die Bohrspindel (32) zum einen mit dem Vorschubelement (35), insbesondere einer Vorschubbrücke, und zum anderen mit einer drehenden Spindelaufnahme (34) über die Antriebsübertragung (31) drehschlüssig verbunden ist, wobei die Spindelaufnahme (34) ihrerseits mit dem Antrieb (6) verbunden ist.

7. Bearbeitungswerkzeug nach einem der Ansprüche 2 bis 6, **dadurch**
**gekennzeichnet, dass** die Stützeinrichtung (7) ein Stützmittel (44) und eine Spanneinrichtung (46) für dessen Befestigung an einem Werkstück (3) oder an einer mit dem Werkstück (3) verbindbaren Schablone (50), insbesondere an einer dortigen Öffnung (51), aufweist.

8. Bearbeitungswerkzeug nach Anspruch 7, **dadurch**
**gekennzeichnet, dass** das Stützmittel (44) als Stützrohr ausgebildet ist und das Bearbeitungselement (5) umfangseitig und führend umgibt, wobei das Stützrohr (44) mit einer Absaugung (45) verbunden ist.

9. **Bearbeitungswerkzeug nach einem der vorhergehenden Ansprüche, dadurch gekennzeichnet, dass die Vorschubeinrichtung (8) eine steuerbare Fixiereinrichtung (42) aufweist.**

10. Bearbeitungsvorrichtung, insbesondere Bohrvorrichtung, mit einem Bearbeitungswerkzeug (1), insbesondere einem Bohrwerkzeug, und mit einer Handhabungseinrichtung (10), insbesondere einem Roboter, zum Handhaben des Bearbeitungswerkzeugs (1), **dadurch gekennzeichnet, dass** das Bearbeitungswerkzeug (1) nach mindestens einem der Ansprüche 1 bis 9 ausgebildet ist.

11. Bearbeitungsvorrichtung nach Anspruch 10, **dadurch gekennzeichnet, dass** die Bearbeitungsvorrichtung (2) eine mit einem Werkstück (3) in definierter Position verbindbare Schablone (50) mit mindestens einer Durchgangsöffnung (51) aufweist, deren Lage mit einer vorgesehenen Bearbeitungsstelle am Werkstück (3) korrespondiert.

12. Bearbeitungsvorrichtung nach Anspruch 10 oder 11, **dadurch gekennzeichnet, dass** die Handhabungseinrichtung (10) als mehrachsiger programmierbarer Roboter ausgebildet ist, der eine oder mehrere kraftgesteuerte oder kraftgeregelte Roboterachsen (I - VII) mit einer zugeordneten, integrierten Sensorik (18) aufweist, die einwirkende Belastungen erfasst.

13. Bearbeitungsvorrichtung nach Anspruch 10, 11 oder 12, **dadurch gekennzeichnet, dass** der Roboter (10) ortsveränderlich und auf einem Transportmittel (53) angeordnet ist.

14. Verfahren zum Bearbeiten, insbesondere zum Bohren, von Werkstücken (3) mit einem von einer Handhabungseinrichtung (10), insbesondere einem Roboter, geführten Bearbeitungswerkzeug (1), insbesondere Bohrwerkzeug, welches ein auf ein Werkstück (3) einwirkendes Bearbeitungselement (5) und einen Anschluss (9) für die Handhabungseinrichtung (10) aufweist, wobei die Handhabungseinrichtung (1) für den Vorschub des Bearbeitungselements (5) eine mit dem Anschluss (9) verbundene Vorschubeinrichtung (8) des Bearbeitungswerkzeugs (1) bewegt und betätigt, **dadurch gekennzeichnet, dass das Bearbeitungswerkzeug (1) eine Verstärkungseinrichtung (4) für den Vorschub, insbesondere für die Vorschubkraft, des Bearbeitungselements (5) aufweist,** wobei **die Verstärkungseinrichtung (4) der Vorschubeinrichtung (8) zugeordnet, vorzugsweise in diese integriert ist** und wobei **die Verstärkungseinrichtung (4) eine Übersetzung (22) aufweist, welche ein mit dem Anschluss (9) verbundenes antreibendes Betätigungselement (20) und ein mit dem Bearbeitungselement (5) verbundenes abtreibendes Betätigungselement (21) aufweist.**

15. Verfahren nach Anspruch 14, **dadurch gekennzeichnet, dass** ein ortsveränderlich und auf einem Transportmittel (53) angeordneter Roboter (10) sich durch Eigenantrieb fortbewegt, wobei er das Bearbeitungswerkzeug (1) als Abstützung und Positionierhilfe benutzt.

## Claims

1. Machining tool, in particular drilling tool, having a machining element (5) that acts on a workpiece (3), and a connection (9) for a manipulating device (10), in particular a robot, wherein the machining tool (1) has a feed device (8), connected to the connection (9), for feeding the machining element (5) by movement of the manipulating device (10) connected to the connection (9), **characterized in that** the machining tool (1) has a reinforcing device (4) for the feed, in particular for the feed force, of the machining element (5), wherein the reinforcing device (4) is assigned to the feed device (8), preferably integrated into the latter, and wherein the reinforcing device (4) has a transmission (22) which has a driving actuating element (20) connected to the connection (9), and a driven actuating element (21) connected to the machining element (5).

2. Machining tool according to Claim 1, **characterized in that** the machining tool (1) has a supporting device (7) for workpiece-side support.

3. Machining tool according to Claim 1 or 2, **characterized in that** the machining tool (1) has a controllable drive (6), in particular a rotary drive, for proper motion of the machining element (5) .

4. Machining tool according to one of the preceding claims, **characterized in that** the reinforcing device (4) is arranged between the connection (9) and the machining element (5) and has a fluidic, in particular hydraulic, or a mechanical transmission (22) .

5. Machining tool according to one of the preceding claims, **characterized in that** the feed device (8) has a movable feed element (40), in particular a slide, connected to the connection (9), and a feed element (33), in particular a feed bridge, connected to the machining element (5), wherein the feed elements (33, 40) are mounted so as to be movable relative to the supporting device (7) and are connected to the actuating elements (20, 21) of the reinforcing device (4).

6. Machining tool according to Claim 5, **characterized in that** the machining element (5) has a drill spindle (32) having a drill bit (33), wherein the drill spindle (32) is connected, for the one part, to the feed element (35), in particular to a feed bridge, and for the other part to a rotating spindle receptacle (34) for conjoint rotation via the drive transmission (31), wherein the spindle receptacle (34) is for its part connected to the drive (6).

7. Machining tool according to one of Claims 2 to 6, **characterized in that** the supporting device (7) has a supporting means (44) and a clamping device (46) for fastening it to a workpiece (3) or to a template (50) that is connectable to the workpiece (3), in particular at an opening (51) in said template.

8. Machining tool according to Claim 7, **characterized in that** the supporting means (44) is in the form of a supporting tube and surrounds the machining element (5) circumferentially and in a guiding manner, wherein the supporting tube (44) is connected to a suction system (45).

9. Machining tool according to one of the preceding claims, **characterized in that** the feed device (8) has a controllable fixing device (42).

10. Machining apparatus, in particular drilling apparatus, having a machining tool (1), in particular a drilling tool, and having a manipulating device (10), in particular a robot, for manipulating the machining tool (1), **characterized in that** the machining tool (1) is configured according to at least one of Claims 1 to 9.

11. Machining apparatus according to Claim 10, **characterized in that** the machining apparatus (2) has a template (50), which is connectable to a workpiece (3) in a defined position, with at least one through-opening (51), the position of which corresponds to an intended machining point on the workpiece (3).

12. Machining apparatus according to Claim 10 or 11, **characterized in that** the manipulating device (10) is in the form of a multiaxial programmable robot, which has one or more force-controlled or force-regulated robot axes (I-VII) with an associated, integrated sensor system (18) that senses acting loads.

13. Machining apparatus according to Claim 10, 11 or 12, **characterized in that** the robot (10) is arranged in a non-stationary manner on a transport means (53).

14. Method for machining, in particular for drilling, workpieces (3) with a machining tool (1), in particular drilling tool, which is guided by a manipulating device (10), in particular a robot, and has a machining element (5) that acts on a workpiece (3), and a connection (9) for the manipulating device (10), wherein the manipulating device (1), for feeding the machining element (5), moves and actuates a feed device (8), connected to the connection (9), of the machining tool (1), **characterized in that** the machining tool (1) has a reinforcing device (4) for the feed, in particular for the feed force, of the machining element (5), wherein the reinforcing device (4) is assigned to the feed device (8), preferably integrated into the latter, and wherein the reinforcing device (4) has a transmission (22) which has a driving actuating element (20) connected to the connection (9), and a driven actuating element (21) connected to the machining element (5).

15. Method according to Claim 14, **characterized in that** a non-stationary robot (10) arranged on a transport means (53) moves forward by proper motion, wherein it uses the machining tool (1) as a support and positioning aid.

## Revendications

1. Outil d'usinage, en particulier outil de perçage, comprenant un élément d'usinage (5) agissant sur une pièce (3) et un raccord (9) destiné à un dispositif de manipulation (10), notamment un robot, l'outil d'usinage (1) comportant un dispositif d'avance (8) relié au raccord (9) destiné à l'avance de l'élément d'usinage (5) par déplacement du dispositif de manipulation (10) relié au raccord (9), **caractérisé en ce que** l'outil d'usinage (1) comporte un dispositif d'amplification (4) destiné à l'avance, en particulier à la force d'avance, de l'élément d'usinage (5), le dispositif d'amplification (4) étant associé au dispositif d'avance (8), de préférence étant intégré à celui-ci, et le dispositif d'amplification (4) comportant une transmission (22) qui comporte un élément d'actionnement menant (20) relié au raccord (9) et un élément d'actionnement mené (21) relié à l'élément d'usinage (5).

2. Outil d'usinage selon la revendication 1, **caractérisé en ce que** l'outil d'usinage (1) comporte un dispositif de support (7) destiné au support côté pièce.

3. Outil d'usinage selon la revendication 1 ou 2, **caractérisé en ce que** l'outil d'usinage (1) comporte un entraînement commandable (6), notamment un entraînement en rotation, destiné au déplacement propre de l'élément d'usinage (5).

4. Outil d'usinage selon l'une des revendications précédentes, **caractérisé en ce que** le dispositif d'amplification (4) est disposé entre le raccord (9) et l'élément d'usinage (5) et comporte une transmission fluidique, notamment hydraulique, ou mécanique (22).

5. Outil d'usinage selon l'une des revendications précédentes, **caractérisé en ce que** le dispositif d'avance (8) comporte un élément d'avance mobile (40) relié au raccord (9), notamment un coulisseau, et un élément d'avance (33) relié à l'élément d'usinage (5), notamment un pont d'avance, les éléments d'avance (33, 40) étant montés de manière mobile par rapport au dispositif de support (7) et étant reliés aux éléments d'actionnement (20, 21) du dispositif d'amplification (4) .

6. Outil d'usinage selon la revendication 5, **caractérisé en ce que** l'élément d'usinage (5) comporte une broche de perçage (32) pourvue d'un foret (33), la broche de perçage (32) étant reliée en rotation d'une part à l'élément d'avance (35), en particulier à un pont d'avance, et d'autre part à un logement de broche rotatif (34) par le biais de la transmission d'entraînement (31), le logement de broche (34) étant relié de son côté à l'entraînement (6).

7. Outil d'usinage selon l'une des revendications 2 à 6, **caractérisé en ce que** le dispositif de support (7) comporte un moyen de support (44) et un dispositif de serrage (46) destiné à fixer ledit moyen à une pièce (3) ou à un gabarit (50) pouvant être relié à la pièce (3), en particulier au niveau d'une ouverture (51).

8. Outil d'usinage selon la revendication 7, **caractérisé en ce que** le moyen de support (44) est réalisé sous la forme d'un tube de support et entoure l'élément d'usinage (5) du côté périphérique et de manière directrice, le tube de support (44) étant relié à un moyen d'aspiration (45).

9. Outil d'usinage selon l'une des revendications précédentes, **caractérisé en ce que** le dispositif d'avance (8) comporte un dispositif de fixation commandable (42).

10. Dispositif d'usinage, notamment dispositif de perçage, comprenant un outil d'usinage (1), notamment un outil de perçage, et un dispositif de manipulation (10), notamment un robot, destiné à la manipulation de l'outil d'usinage (1), **caractérisé en ce que** l'outil d'usinage (1) est conçu selon l'une au moins des revendications 1 à 9.

11. Dispositif d'usinage selon la revendication 10, **caractérisé en ce que** le dispositif d'usinage (2) comporte un gabarit (50) qui peut être relié à une pièce (3) dans une position définie et qui est pourvu d'au moins une ouverture traversante (51) dont la position correspond au niveau de la pièce (3) à un emplacement d'usinage prévu.

12. Dispositif d'usinage selon la revendication 10 ou 11, **caractérisé en ce que** le dispositif de manipulation (10) est réalisé sous la forme d'un robot programmable multiaxes qui comporte un ou plusieurs axes de robot (I - VII) commandés en force ou régulés en force et qui est pourvu d'un système de détection intégré associé (18) qui détecte les contraintes agissantes.

13. Dispositif d'usinage selon la revendication 10, 11 ou 12, **caractérisé en ce que** le robot (10) est transportable et est disposé sur un moyen de transport (53) .

14. Procédé d'usinage, notamment de perçage, de pièces (3) à l'aide d'un outil d'usinage (1), notamment d'un outil de perçage, qui est guidé par un dispositif de manipulation (10), notamment un robot (3), et qui comporte un élément d'usinage actif (5) agissant sur une pièce et un raccord (9) destiné au dispositif de manipulation (10), le dispositif de manipulation (1) déplaçant et actionnant un dispositif d'avance (8), relié au raccord (9), de l'outil d'usinage (1) pour faire avancer l'élément d'usinage (5), **caractérisé en ce que** l'outil d'usinage (1) comporte un dispositif d'amplification (4) destiné à l'avance, en particulier à la force d'avance, de l'élément d'usinage (5), le dispositif d'amplification (4) étant associé au dispositif d'avance (8), de préférence étant intégré à celui-ci, et le dispositif d'amplification (4) comportant une transmission (22) qui comporte un élément d'actionnement menant (20) relié au raccord (9) et un élément d'actionnement mené (21) relié à l'élément d'usinage (5).

15. Procédé selon la revendication 14, **caractérisé en ce qu'**un robot (10) transportable et disposé sur un moyen de transport (53) se déplace par son propre entraînement, ledit robot utilisant l'outil d'usinage (1) comme support et aide au positionnement.
